# EUROPÄISCHE PATENTSCHRIFT

(11) **EP 2 393 702 B1**
(45) Veröffentlichungstag und Bekanntmachung des Hinweises auf die Patenterteilung: **24.04.2013**
(21) Anmeldenummer: 09774672.1
(22) Anmeldetag: 11.12.2009
(51) Int. Cl.: B62D 15/02

(54) **VERFAHREN UND VORRICHTUNG ZUM BETREIBEN EINER LENKANORDNUNG EINES KRAFTFAHRZEUGS**
METHOD AND DEVICE FOR OPERATING A STEERING ARRANGEMENT OF A MOTOR VEHICLE
PROCÉDÉ ET DISPOSITIF POUR FAIRE FONCTIONNER UN SYSTÈME DE DIRECTION D'UN VÉHICULE

(30) Priorität: 09.02.2009 DE 102009000726
(43) Veröffentlichungstag der Anmeldung: 14.12.2011
(73) Patentinhaber: Robert Bosch GmbH, 70442 Stuttgart (DE)
(72) Erfinder: PAMPUS, Christian, 71229 Leonberg (DE); NIEMZ, Volker, 71277 Rutesheim (DE)
(86) Internationale Anmeldenummer: PCT/EP2009/066951
(87) Internationale Veröffentlichungsnummer: WO 2010/088996

(56) Entgegenhaltungen:
- EP-A1- 1 862 372

## Beschreibung

Die Erfindung betrifft ein Verfahren zum Betreiben einer Lenkanordnung eines Kraftfahrzeugs beim voll- oder halbautomatischen Einparken mittels eines ein Steuergerät aufweisenden Einparksystems, wobei eine Totzeit der Lenkanordnung ermittelt und beim Einparken berücksichtigt wird. Die Erfindung betrifft ferner eine Vorrichtung zum voll- oder halbautomatischen Einparken eines eine solche Lenkanordnung aufweisenden Kraftfahrzeugs.

### Stand der Technik

Bei kontinuierlich steigender Verkehrsdichte des weltweiten Straßenverkehrs und zunehmend knapper werdendem Parkraum, insbesondere in Ballungszentren, erfreuen sich Einparkhilfen wie halb- oder vollautomatische Einparksysteme (Einparkassistenten) bei Verkehrsteilnehmern zunehmender Beliebtheit. Diese vereinfachen alltägliche Fahrmanöver beim Einparken sehr stark, wobei der Fahrer während des Einparkvorgangs in eine Längsparklücke entweder durch von dem Parkassistenten gegebene Lenkanweisungen oder durch eine mehr oder weniger stark automatisierte Lenkradführung unterstützt wird. Ein solches Einparksystem ist beispielsweise aus der DE 38 13 083 A1 bekannt.

Die automatische Lenkradführung wird derzeit mittels einer elektronischen Lenkung realisiert, die während des Einparkvorgangs zu definierten Zeitpunkten angesteuert wird. Hierbei werden von einem Steuergerät beispielsweise über ein Bussystem und ein Gateway an ein Steuergerät der Einparkhilfe Signale abgegeben, wodurch ein Aktor angesteuert wird, der auf die Mechanik der Lenkung des Kraftfahrzeugs einwirkt. Derartige Systeme weisen Totzeiten auf, also Zeiten, in denen das System nicht oder noch nicht reagiert. Solche Totzeiten bilden gewissermaßen Verzögerungen eines Lenkbefehls. Derartige Totzeiten resultieren aus dem internen Programmablauf im Steuergerät, also aus der Berechnung von Algorithmen des Einparksystems selbst sowie der Zuteilung von Rechenzeit an diese Algorithmen, aus der Busarchitektur und wiederum aus der Verarbeitung von Steuersignalen, die vom Steuergerät kommen, im Steuergerät der elektronischen Lenkung, das den Aktor ansteuert. In geringem Maße sind auch mechanische Komponenten wie Gleit- oder Reibwiderstände und beispielsweise der Aufbau von Hydraulikdruck zu berücksichtigen. Derartige Totzeiten müssen während des Einparkvorgangs berücksichtigt werden, da die berechnete Trajektorie ansonsten nicht zutreffend abgefahren wird und der Einparkvorgang nicht in der gewünschten Art und Weise erfolgt.

EP 1 862 372 offenbart den Oberbegriff der Ansprüche 1 und 4.

Aufgabe der Erfindung ist es, eine Totzeit des gesamten Systems einer solchen Lenkanordnung beim voll- oder halbautomatischen Einparken zu ermitteln und zu berücksichtigen, wobei eine Selbstkalibrierung dieser Gesamtsystemtotzeit angestrebt ist.

### Offenbarung der Erfindung

Hierzu wird ein Verfahren vorgeschlagen zum Betreiben einer Lenkanordnung eines Kraftfahrzeugs beim voll- oder halbautomatischen Einparken mittels eines ein Steuergerät aufweisenden Einparksystems, wobei eine Totzeit der Lenkanordnung ermittelt und beim Einparken berücksichtigt wird. Es ist vorgesehen, dass die Ermittlung der Totzeit durch eine Messung einer Zeitspanne zwischen einem von dem Steuergerät generierten Lenkwinkelbefehl und dessen Ausführung an mindestens einem Rad des Kraftfahrzeugs erfolgt. Erfindungsgemäß wird die Totzeit durch eine Messung ermittelt, nämlich durch Messung der Zeitspanne, die zwischen dem von dem Steuergerät generierten Lenkwinkelbefehl und dessen vollständiger Ausführung an wenigstens einem Rad des Kraftfahrzeugs liegt. Hierdurch ist es möglich, die einzelnen Komponenten der Totzeit, insbesondere nämlich die interne Softwarerepräsentation, interne Bus-Zugriffssteuerungen im Steuergerät, Übertragungsweg auf dem Bus, Latenzen, wie sie beispielsweise durch Gateways im Übertragungsweg entstehen sowie externe Signalverarbeitung des Steuergeräts der elektronischen Lenkung selbst, zu berücksichtigen. Hierbei werden keine Durchschnitts- oder Vorgabewerte, sondern die im Gesamtsystem des jeweiligen Kraftfahrzeugs tatsächlich anzutreffenden Werte ermittelt und als Gesamttotzeit gemessen. Die Zeit ist eine messtechnisch sehr leicht und sehr präzise erfassbare Größe. Die komplexen Berechnungen während des Einparkvorgangs selbst (nämlich dem Generieren von Lenkwinkelbefehlen zum Abfahren der Einparktrajektorie, die aus einer intelligenten Aneinanderreihung von

Geraden, Kreisabschnitten und Klothoiden besteht, kann hierbei entfallen, so dass mehr Rechenzeit und dadurch eine geringere softwarebedingte beziehungsweise verarbeitungsbedingte Gesamttotzeit resultiert. Gleichzeitig kann auf diese Weise tatsächlichen Gegebenheiten des jeweils vorliegenden Systems des jeweiligen Kraftfahrzeuges Rechnung getragen werden, insbesondere Alterungserscheinungen, Toleranzen der Mechanik oder Schwergängigkeit. Die Gesamttotzeit kann auf diese Weise sehr viel präziser und auf das jeweilige System des Kraftfahrzeugs abgestimmt erfolgen. Hierdurch wird eine Kalibrierung der Totzeit für das jeweilige Kraftfahrzeug möglich.

In einer weiteren Verfahrensausbildung wird die Messung kontinuierlich durchgeführt. Es erfolgt demzufolge ein permanentes Überwachen ("Tracking") der Zeitspanne, die zwischen dem ausgegebenen Lenkwinkelbefehl (Soll-Lenkradwinkel) bis zum tatsächlich erfolgten, physikalischen Einstellen dieses Lenkwinkels erfolgt. Durch die fortdauernde Erfassung lässt sich insbesondere eine Veränderung des Gesamtsystems der Lenkanordnung, einschließlich aller an dem Lenkvorgang beteiligter Komponenten und Einflüsse, sicher erfassen.

In einer weiteren Verfahrensausbildung wird die Totzeit durch Mittelwertbildung, insbesondere bei einem Initialbetrieb, bestimmt. Gerade bei kontinuierlicher Messung der Totzeit führt die Mittelwertbildung zu sehr genauen Ergebnissen und bei entsprechender Berücksichtigung durch frühzeitiges Geben eines Messlenkwinkelbefehls durch das Steuergerät zu einer sehr guten Totzeitkompensation. Die Totzeit kann, beispielsweise aufgrund schwankender Busaktivitäten (Busload) leicht schwanken, weshalb sie beispielsweise zunächst initial über eine definierte oder definierbare Anzahl von Einparkzyklen gefiltert ermittelt werden soll. Während des Normalbetriebs kann die jeweils aktuelle Totzeit entsprechend berücksichtigt werden.

Durch eine solche selbstkalibrierende Totzeitberücksichtigung können die komplexen Totzeitberechnungen innerhalb der Applikation eingespart werden. Das System kann sich auf plötzlich oder schleichend größer werdende Totzeiten, beispielsweise durch Effekte auf der Übertragungsstrecke wie Alterung, höhere Busbelastung oder Ähnlichem anpassen und wird varianten- beziehungsweise ausführungsunabhängig; dies bedeutet, dass eine solche selbstkalibrierende Totzeitkompensation universell bei allen möglichen Kraftfahrzeugmodellen, die eine entsprechende Lenkanordnung aufweisen, eingesetzt werden kann. Auf einzelne, von Modell zu Modell abweichende Parameter muss das System nicht entsprechend programmiert werden, wie dies im Stand der Technik aber bei algorithmischer Bestimmung der Totzeit erforderlich ist. Ferner können die derzeit üblichen, sehr komplizierten Lenkwinkelsensoren durch einfacher aufgebaute Sensoren ersetzt werden, was wiederum erhebliche Kostenvorteile bringt.

Das System kann sich selbstständig an die jeweiligen Umgebungsbedingungen anpassen, wodurch die interne Lenkungsschnittstelle ebenfalls den aktuellen Gegebenheiten angepasst wird.

Weiter wird eine Vorrichtung zum voll- oder halbautomatischen Einparken eines eine Lenkanordnung aufweisenden Kraftfahrzeugs, mit einem ein Steuergerät aufweisenden Einparksystem, wobei eine Totzeit der Lenkanordnung ermittelt und beim Einparken berücksichtigt wird, vorgeschlagen. Hierbei ist eine Messeinrichtung zur Ermittlung der Totzeit vorgesehen, die diese durch Messung einer Zeitspanne zwischen einem von dem Steuergerät generierten Lenkwinkelbefehl und dessen mittels eines Sensors ermittelten Ausführung an mindestens einem Rad des Kraftfahrzeugs ermittelt. Die Messeinrichtung dient demzufolge zur Ermittlung der Totzeit durch Messen der Zeitspanne, die zwischen dem Generieren des Lenkwinkelbefehls durch das Steuergerät und dessen tatsächlicher, durch den Sensor ermittelter Ausführung an mindestens einem Rad des Kraftfahrzeugs verstreicht.

Die Erfindung wird nachfolgend anhand eines Ausführungsbeispiels näher erläutert, ohne aber hierauf beschränkt zu sein.

### Kurze Beschreibung der Zeichnungen

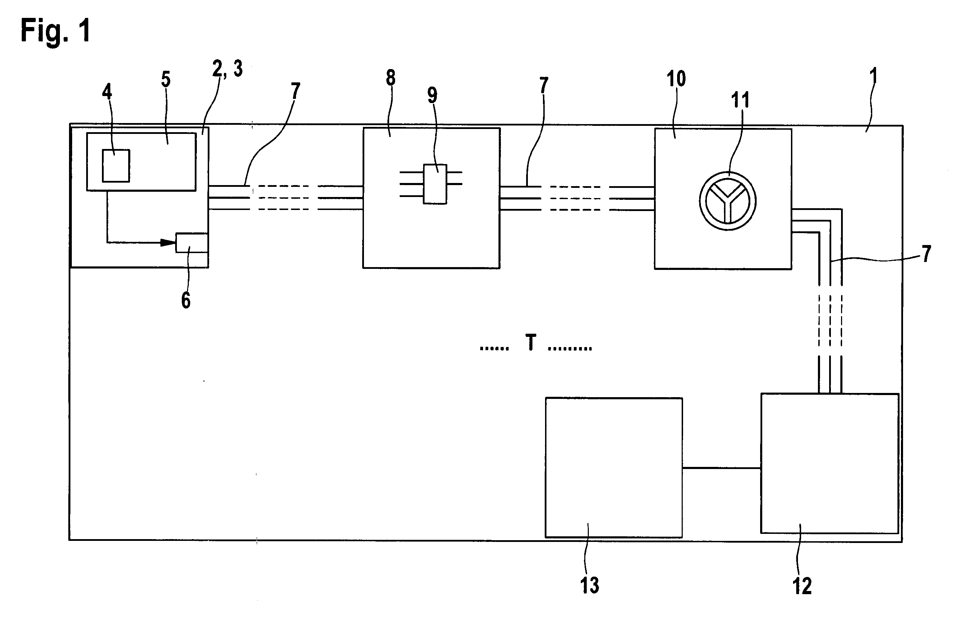

- Es zeigen Figur 1: eine Lenkanordnung eines Kraftfahrzeugs mit den entsprechenden, eine Totzeit der Lenkanordnung beeinflussenden Einflussquellen;
- Figur 2: eine oszillografische Darstellung eines Lenkwinkelbefehls und dessen Ausführung ohne Totzeitkompensation und
- Figur 3: einen Lenkwinkelbefehl mit optimal erfolgter Totzeitkompensation.

### Ausführungsformen der Erfindung

Figur 1 zeigt schematisch eine Lenkanordnung 1 eines nicht dargestellten Kraftfahrzeugs. Die Lenkanordnung 1 umfasst hierbei ein Steuergerät 2, insbesondere ein Zentralsteuergerät 3 des Kraftfahrzeugs mit einem ein Software-Programm 4 abarbeitenden Rechner 5, der mit nicht dargestellten Sensoren zur Vermessung von für ein Einparken tauglichen Einparklücken kommuniziert, und der Lenkwinkelbefehle 6 zum automatischen oder halbautomatischen Einparken des nicht dargestellten Kraftfahrzeugs generiert. Das Steuergerät 2 ist über ein Bussystem 7 und ein am Bussystem 7 angeschlossene Gateway 8, das beispielsweise einen Multiplexer 9 zur Erhöhung der Signaldichte auf dem Bussystem 7 aufweist, mit weiteren Komponenten verbunden. Im Zuge des Bussystems 7 dem Gateway 8 nachgeschaltet ist ein Einparkhilfensteuergerät 10, das mit einem Lenkrad 11 des nicht dargestellten Kraftfahrzeugs wirkverbunden ist. Dem Einparkhilfensteuergerät 10 im Bussystem 7 nachgeschaltet ist ein Aktor 12 zur Betätigung einer Lenkmechanik 13, die wie aus dem Stand der Technik bekannt ausgestaltet sein kann und unmittelbar mit einem der lenkbaren Räder des Kraftfahrzeugs oder mit beiden lenkbaren Rädern des Kraftfahrzeugs verbunden ist.

Das Steuergerät 2 führt zum Einparken Berechnungen einer Trajektorie aus, wobei es in Abarbeitung der Software 4 Lenkwinkelbefehle 6 ausgibt, die auf dem Bussystem 7, verdichtet durch den Multiplexer 9 des Gateways 8, an das Einparkhilfesteuergerät 10 weitergeleitet werden und dieses zur Ansteuerung des Aktors 12 zum Bewegen der Lenkmechanik 13 veranlassen, wobei, zur Verdeutlichung der Lenkbetätigung durch die Einparkhilfe für einen nicht dargestellten Fahrer des Kraftfahrzeugs, bevorzugt das Lenkrad 11 mitbewegt wird; gleichzeitig ist, beispielsweise in Notfällen, bei plötzlichem Auftreten eines Hindernisses, beispielsweise eines Fußgängers, hierdurch ein Eingriff in das Lenkrad 11 und den Ablauf des Einparkens durch den nicht dargestellten Fahrer des Kraftfahrzeugs möglich. Die Berechnung der zum Einparken erforderlichen Trajektorie durch die Software 4 im Rechner 5 des Steuergeräts 2 braucht eine bestimmte Zeit, insbesondere, wenn dynamisch unter jeweils aktuellem Rückgriff auf Einparksensoren (nicht dargestellt) zur Vermessung der Parklücke (nicht dargestellt) zurückgegriffen wird oder wenn solche Rückgriffe auf die Sensoren während des Einparkens intervallisch erfolgen. Die Lenkwinkelanforderungen 6 erfahren auf dem Bussystem 7 eine gewisse Verzögerung, beispielsweise auch durch das Gateway 8 und/oder den Multiplexer 9 bedingt, ebenso benötigt ihre Umsetzung im Einparkhilfensteuergerät 10 eine zwar endliche, kurze, aber nicht zu vernachlässigende Zeitspanne. Bis zur tatsächlichen Ausführung des Lenkwinkelbefehls 6 durch die Lenkmechanik 13, also dem Anliegen des von der Software 4 berechneten und vom Steuergerät 2 angeforderten Lenkwinkels an der Lenkmechanik 13, beispielsweise einem Rad des Kraftfahrzeugs, vergeht eine gewisse Zeitspanne, die im weitesten Sinne als Verzögerung der Abarbeitung des Lenkwinkelbefehls 6 betrachtet werden kann. Diese Zeit ist eine Totzeit T, die durch das Gesamtsystem der Lenkanordnung 1 bedingt ist. Einzelne Totzeitkomponenten der Totzeit T, die von einzelnen Bausteinen der Lenkanordnung 1, wie dargestellt, verursacht werden, gehen in ihrer Summe und jeweiligen Wechselwirkung in die Totzeit T ein. Während der Totzeit T rollt das Kraftfahrzeug aber, so dass sich - unkompensiert - Abweichungen von der berechneten Trajektorie ergeben.

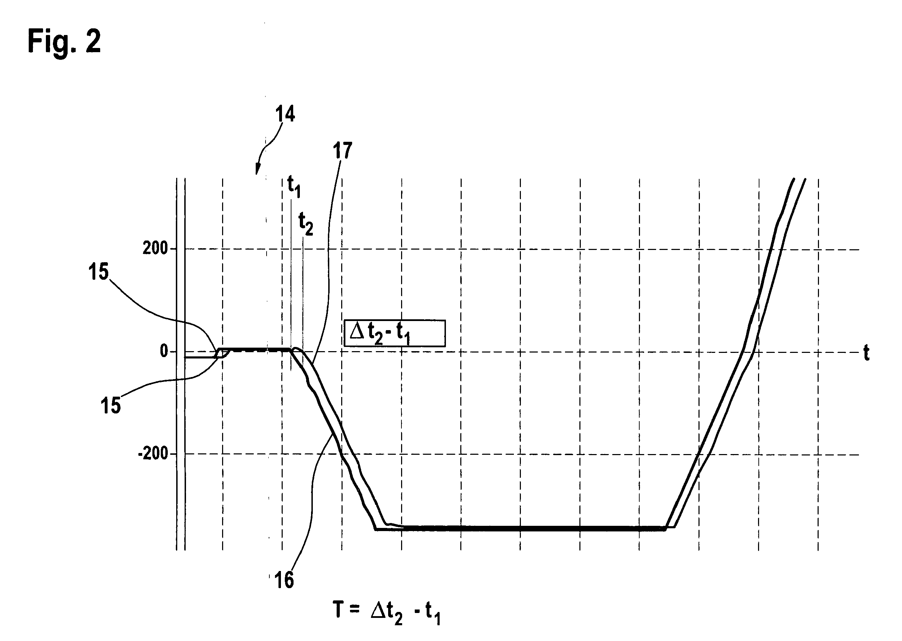

Figur 2 verdeutlicht in einer oszillografischen Darstellung 14 die Totzeit T als Differenz Δ einer Zeit t₂ als einem tatsächlichen Ausführungszeitpunkt (Anliegen eines bestimmten Lenkwinkels an der aus Figur 1 ersichtlichen Lenkmechanik 13) und einer Zeit t₁ als dem Lenkwinkelbefehlszeitpunkt, also dem Zeitpunkt, in dem das aus Figur 1 ersichtliche Steuergerät 2 durch die Software 4 den Lenkwinkelbefehl 6 ausgegeben hat, um eine bestimmte Lenkwinkel-Stellung der Lenkmechanik 13 (Figur 1) anzufordern. Die oszillografische Darstellung 14 in Figur 2 ist hierbei nicht Totzeit-kompensiert, was bedeutet, dass eine Totzeit T als A t₂ - t₁ besteht. Hierbei ist aus dem Verlauf der Graphen 15 ersichtlich, dass der jeweils zeitlich frühere Befehlsgraph 16, der auf der x-Achse, auf der die Zeit t abgetragen ist, den zeitlichen Verlauf wiedergibt, wie er dem Lenkwinkelbefehl 6 (Figur 1) entspricht, dem Ausführungsgraphen 17, wie er die Ausführung, also das tatsächliche, physikalische Anliegen des angeforderten Lenkwinkels nach Lenkwinkelbefehl 6 an der aus Figur 1 ersichtlichen Lenkmechanik 13, zeitlich voraus ist, also der Ausführungsgraph 17 dem Befehlsgraphen 16 zeitlich nachfolgt. In den beiden dargestellten Zeitpunkten t₁ und t₂, wobei t₁ der Lenkbefehlszeitpunkt und t₂ der Ausführungszeitpunkt ist, ist die Totzeit T als Differenz t₂ - t₁ ersichtlich. Bei jeder Änderung des Lenkwinkels (auf der γ-Achse als Lenkradwinkel dargestellt) erfolgt aufgrund der Totzeit T eine Verzögerung des Ausführungsgraphen 17 relativ zum Befehlsgraphen 16.

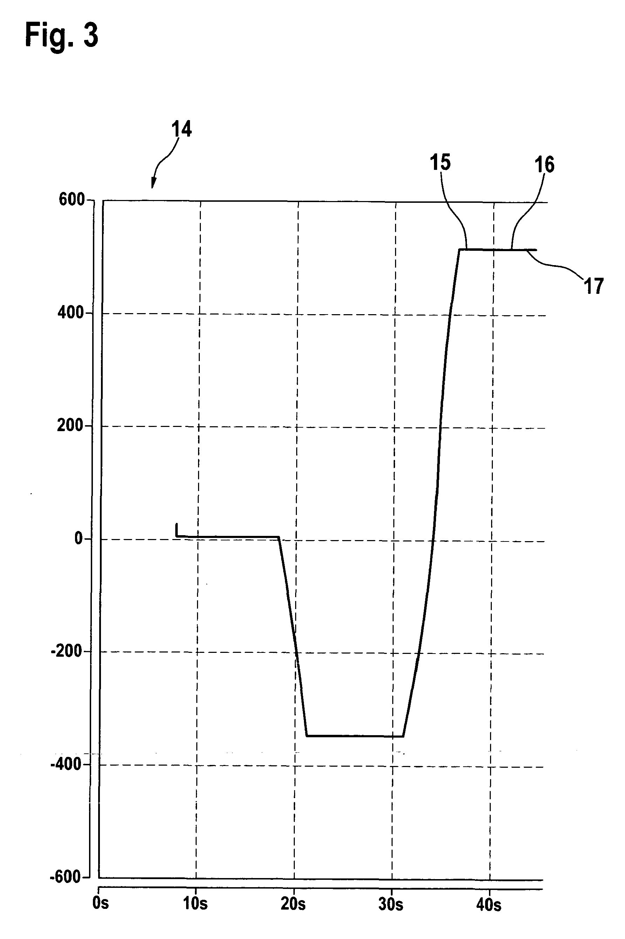

Figur 3 zeigt ebenfalls eine oszillografische Darstellung 14 einer totzeitkompensierten Lenkanordnung 1, bei der die Totzeit T durch Messung der in Figur 2 dargestellten Differenz Δ t₂ - t₁ ermittelt und durch entsprechend frühzeitige Abgabe des aus Figur 1 ersichtlichen Lenkwinkelbefehls 6 ausgeglichen wurde. Eine Verschiebung, somit ein zeitliches Auseinanderfallen der beiden Graphen 15 für den Befehlsgraphen 16 und dem Ausführungsgraphen 17 liegt nicht mehr vor, Δ t₂ - t₁ ist somit Null oder im Wesentlichen Null.

## Patentansprüche

1. Verfahren zum Betreiben einer Lenkanordnung eines Kraftfahrzeugs beim voll- oder halbautomatischen Einparken mittels eines ein Steuergerät aufweisenden Einparksystems, wobei eine Totzeit der Lenkanordnung ermittelt und beim Einparken berücksichtigt wird, **dadurch gekennzeichnet, dass** die Ermittlung der Totzeit durch eine Messung einer Zeitspanne zwischen einem von dem Steuergerät generierten Lenkwinkelbefehl und dessen Ausführung an mindestens einem Rad des Kraftfahrzeugs erfolgt.

2. Verfahren nach Anspruch 1, **dadurch gekennzeichnet, dass** die Messung kontinuierlich durchgeführt wird.

3. Verfahren nach einem der vorhergehenden Ansprüche, **dadurch gekennzeichnet, dass** die Totzeit (T) durch Mittelwertbildung, insbesondere bei einem Initialbetrieb, bestimmt wird.

4. Vorrichtung zum voll- oder halbautomatischen Einparken eines eine Lenkanordnung (1) aufweisenden Kraftfahrzeugs, mit einem ein Steuergerät (2) aufweisenden Einparksystem, wobei eine Totzeit (T) der Lenkanordnung (1) ermittelt und beim Einparken berücksichtigt wird **gekennzeichnet durch** eine Messeinrichtung, die **durch** Messung einer Zeitspanne zwischen einem von dem Steuergerät (2) generierten Lenkwinkelbefehl (6) und dessen mittels eines Sensors ermittelten Ausführung an mindestens einem Rad des Kraftfahrzeugs die Totzeit (T) ermittelt.

## Claims

1. Method for operating a steering arrangement of a motor vehicle during fully automatic or semi-automatic parking by means of a parking system having a control unit, wherein a lag time of the steering arrangement is determined and is taken into account during parking, **characterized in that** the determination of the lag time is carried out by measuring a time period between a steering angle command generated by the control unit and the execution of said command at at least one wheel of the motor vehicle.

2. Method according to Claim 1, **characterized in that** the measurement is carried out continuously.

3. Method according to one of the preceding claims, **characterized in that** the lag time (T) is determined by forming mean values, in particular during the initial operation.

4. Device for fully automatic or semi-automatic parking of a motor vehicle having a steering arrangement (1) having a parking system which comprises a control unit (2), wherein a lag time (T) of the steering arrangement (1) is determined and is taken into account during parking, **characterized by** a measuring apparatus which determines the lag time (T) by measuring a time period between a steering angle command (6) generated by the control unit (2) and the execution of said command, determined by means of a sensor, at at least one wheel of the motor vehicle.

## Revendications

1. Procédé de conduite d'un ensemble de braquage d'un véhicule automobile lors d'une opération de stationnement entièrement automatique ou semi-automatique au moyen d'un système de stationnement qui présente un appareil de commande, dans lequel un temps mort de l'ensemble de braquage est déterminé et est pris en compte lors de la manoeuvre de stationnement, **caractérisé en ce que**
la détermination du temps mort s'effectue par la mesure du temps qui s'écoule entre un ordre d'angle de braquage délivré par l'appareil de commande et son exécution sur au moins une roue du véhicule automobile.

2. Procédé selon la revendication 1, **caractérisé en ce que** la mesure est réalisée en continu.

3. Procédé selon l'une des revendications précédentes, **caractérisé en ce que** le temps mort (T) est déterminé par formation d'une valeur moyenne, en particulier lors d'une mise en service initiale.

4. Ensemble de stationnement entièrement automatique ou semi-automatique d'un véhicule automobile présentant un ensemble de braquage (1), l'ensemble présentant un système de stationnement doté d'un appareil de commande (2), le temps mort (T) de l'ensemble de braquage (1) étant déterminé et pris en compte lors d'une manoeuvre de stationnement, **caractérisé par**
un dispositif de mesure qui détermine le temps mort (T) par mesure du temps qui s'écoule entre un ordre d'angle de braquage (6) délivré par l'appareil de commande (2) et son exécution sur au moins une roue du véhicule automobile.
